# EUROPEAN PATENT APPLICATION

(11) **EP 4 725 806 A1**
(43) Date of publication of application: **15.04.2026**
(21) Application number: 24906097.1
(22) Date of filing: 04.12.2024
(51) Int. Cl.: B62D 25/20

(54) **FRONT FLOOR AND VEHICLE**

(30) Priority: 18.12.2023 CN 202311745240
(71) Applicant: ZHEJIANG ZEEKR INTELLIGENT TECHNOLOGY CO., LTD., Ningbo, Zhejiang 315899 (CN); Zhejiang Geely Holding Group Co., Ltd., Hangzhou, Zhejiang 310051 (CN)
(72) Inventor: DUAN, Yanyan, Ningbo, Zhejiang 315899 (CN); LIU, Qun, Ningbo, Zhejiang 315899 (CN); YU, Tenglong, Ningbo, Zhejiang 315899 (CN); ZHOU, Jinbo, Ningbo, Zhejiang 315899 (CN); MAO, Yun, Ningbo, Zhejiang 315899 (CN); PAN, Fuli, Ningbo, Zhejiang 315899 (CN); ZHANG, Yao, Ningbo, Zhejiang 315899 (CN); YAN, Wude, Ningbo, Zhejiang 315899 (CN); SUN, Weiliang, Ningbo, Zhejiang 315899 (CN); LIU, Yang, Ningbo, Zhejiang 315899 (CN)
(74) Representative: Michalski Hüttermann & Partner Patentanwälte mbB
(86) International application number: PCT/CN2024/136747
(87) International publication number: WO 2025/130613

(57) **Abstract**

Disclosed are a front floor (1) and a vehicle (100). The front floor (1) is applied to the vehicle (100). The front floor (1) includes a front floor body (11) and a front interface structure (12). The front floor body (11) includes a lower surface (111) and a first side (112) extending in a first direction (X). The front interface structure (12) is recessed upward from the lower surface (111). The front interface structure (12) extends along a second direction (Y) and includes an opening (121) disposed on the first side (112). The front interface structure (12) is configured to be connected to a rear floor (2) of the vehicle (100). The first direction (X) is different from the second direction (Y).

## Description

### CROSS-REFERENCE TO RELATED APPLICATIONS

This application claims priority to Chinese Patent Application No. 202311745240.X, entitled "FRONT FLOOR AND VEHICLE," and filed on December 18, 2023, which is incorporated herein by reference in its entirety.

### TECHNICAL FIELD

The present disclosure relates to the field of vehicle technologies, and in particular, to a front floor and a vehicle.

### BACKGROUND

With the popularity of vehicles, consumers hope that there are a wide variety of vehicle models available on the market to meet different aesthetic needs. In addition, among vehicle models from the same company, consumers also expect that vehicle models from a high-end line and a low-end line can be clearly distinguishable.

### SUMMARY

In a first aspect, the present disclosure provides a front floor applied to a vehicle. The front floor includes:
a front floor body including an upper surface, a lower surface, and a first side extending in a first direction; and
a front interface structure recessed upward or protruding downward from the lower surface, where the front interface structure extends in a second direction and includes an opening disposed on the first side; the front interface structure is configured to be connected to a rear floor of the vehicle; and the first direction is different from the second direction.

In some embodiments, the front floor body includes a functional area and a connection area; the connection area is disposed between the first side and the functional area; the functional area is configured to be connected to a front seat of the vehicle; and the front interface structure is disposed in the connection area.

In some embodiments, the connection area includes an edge disposed close to the functional area; and a distance between a side of the front interface structure away from the opening and the edge is greater than or equal to 10 mm and less than or equal to 40 mm.

In some embodiments, the front floor further includes a clearance structure recessed upward from the lower surface; the clearance structure extends along the second direction; and the front interface structure is further disposed on a bottom wall of the clearance structure.

In some embodiments, a recess depth of the clearance structure recessed upward from the lower surface is greater than or equal to 30 mm and less than or equal to 40 mm; and/or
a width of the clearance structure in the first direction is greater than or equal to 245 mm and less than or equal to 265 mm.

In some embodiments, a width of the front interface structure in the first direction is greater than or equal to 45 mm and less than or equal to 65 mm; and/or
a depth of the front interface structure recessed upward from the lower surface is greater than or equal to 3 mm and less than or equal to 6 mm; or a depth of the front interface structure protruding downward from the lower surface is greater than or equal to 3 mm and less than or equal to 6 mm.

In a second aspect, the present disclosure provides a vehicle, including the front floor in the foregoing embodiments and a rear floor, where the rear floor includes a rear interface structure that cooperates with the front interface structure, so that the rear floor and the front floor are connected with each other in the second direction.

In some embodiments, the rear floor includes a rear floor body and a connection plate; the rear floor body and the connection plate are fixedly connected with each other or integrally formed; and the rear interface structure is disposed on the connection plate.

In some embodiments, the connection plate is fixedly connected to the rear floor body; and the connection plate includes:
a first portion connected to the front floor;
a second portion fixedly connected to the rear floor body, where the second portion and the first portion are spaced apart from each other in the second direction; and
a third portion connecting the first portion and the second portion, where the third portion extends from the first portion to the second portion along a direction from the lower surface to the upper surface.

In some embodiments, the vehicle includes a seat; the rear floor includes a seat interface; and the seat is connected to the rear floor through the seat interface; and/or
the vehicle includes a battery; the rear floor includes a battery interface; and the battery is connected to the rear floor through the battery interface; and/or
the vehicle includes a suspension; the rear floor includes a suspension interface; and the suspension is connected to the rear floor through the suspension interface; and/or
the vehicle includes a sill; the rear floor includes a sill interface; and the sill is connected to the rear floor through the sill interface.

It can be seen from the foregoing embodiments that the front interface structure of the front floor in the present disclosure is provided with an opening, so that the rear floor can enter the front interface structure in the second direction through the opening, and a relative position between the rear floor and the front floor can be adjusted by adjusting a mating depth between the front interface structure and the rear floor. Compared with the front interface structure closed in the second direction, the front interface structure of the present disclosure has a reduced requirement for the rear interface structure in terms of shape matching, facilitating the connection of the same front interface structure to rear floors with different sizes and shapes.

It is to be understood that both the foregoing general description and the following detailed description are illustrative and explanatory only, and are not restrictive of the present disclosure.

### BRIEF DESCRIPTION OF DRAWINGS

To describe the technical solutions in the embodiments of the present disclosure more clearly, the drawings required in the description of the embodiments will be briefly described below. The drawings in the following description are only some embodiments of the present disclosure. For those skilled in the art, other drawings can be obtained based on these drawings without any creative effort.
FIG. 1 is a partially exploded view of a vehicle according to an embodiment of the present disclosure.
FIG. 2 is a partially exploded view of a vehicle according to another embodiment of the present disclosure.
FIG. 3 is a partial exploded view of a vehicle according to still another embodiment of the present disclosure.
FIG. 4 is a partial simplified schematic diagram of a vehicle according to an embodiment of the present disclosure.
FIG. 5 is a partial simplified schematic diagram of a vehicle according to another embodiment of the present disclosure.
FIG. 6 is an overall schematic diagram of a front floor of a vehicle according to an embodiment of the present disclosure.
FIG. 7 is a partial schematic diagram of a front floor of a vehicle according to an embodiment of the present disclosure.
FIG. 8 is a partial schematic diagram of a front floor of a vehicle according to another embodiment of the present disclosure.

Description of reference signs:
100 vehicle; 1 front floor; 11 front floor body; 111 lower surface; 112 first side; 113 functional area; 1131 reinforcing rib; 114 connection area; 1141 edge; 115 upper surface; 12 front interface structure; 121 opening; 13 clearance structure; 2 rear floor; 21 rear interface structure; 22 rear floor body; 23 connection plate; 231 first portion; 232 second portion; 233 third portion; 234 upper surface; 235 lower surface; 24 seat interface; 25 sill interface; 3 battery; 4 rear seat; 5 suspension; 6 pipeline; X first direction; Y second direction; W1 width; W2 width; D1 depth; D2 depth; D3 depth.

### DETAILED DESCRIPTION

Illustrative embodiments, examples of which are illustrated in the accompanying drawings, will be described in detail herein. When the following description refers to the drawings, like numerals in different drawings indicate the same or similar elements, unless otherwise indicated. The embodiments described in the following illustrative embodiments do not represent all embodiments consistent with the present disclosure. Rather, they are merely examples of devices consistent with some aspects of the present disclosure as detailed in the appended claims.

The term used in the present disclosure is for the purpose of describing particular embodiments only and is not intended to be limiting of the present disclosure. Technical terms or scientific terms used in the present disclosure should have general meanings as understood by one of ordinary skill in the art to which the present disclosure belongs, unless otherwise defined. Terms, such as "first", "second", or the like, used in the specification and claims of the present disclosure do not indicate any order, quantity, or importance, but are merely used to distinguish between different components. Similarly, terms, such as "one", "a/an", or the like, do not indicate a quantity limitation, but indicate that there is at least one, unless otherwise defined. The terms "a plurality of/multiple" and "several" refer to two or more. Unless otherwise indicated, terms, such as "front", "rear", "lower", "upper", and/or the like, are merely for ease of description, and are not limited to one position or one spatial orientation. Terms, such as "include", "comprise", or the like, mean that the elements or objects before "include" or "comprise" cover the elements or objects and equivalents thereof listed after "include" or "comprise", without excluding other elements or objects. Terms, such as "connect", "connect with each other", or the like, are not limited to physical or mechanical connections, and may include electrical connections, whether direct or indirect. As used in this specification and the appended claims, the singular forms, such as "a/an", "said" and "the", are also intended to include the plural forms, unless clearly indicated otherwise in the context. It should also be understood that the term "and/or" as used herein refers to and includes any or all possible combinations of one or more of the associated listed items.

For vehicle manufacturers, the development cycle of modem vehicles is getting shorter and shorter, and how to improve the versatility of vehicle parts so that they can be applied to different vehicle models and connected to components with different structures as much as possible, becomes a concern of the vehicle manufacturers.

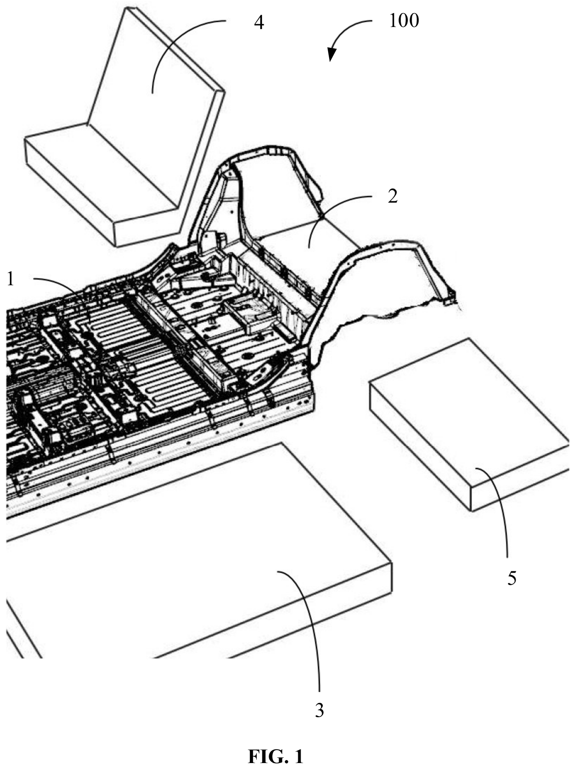

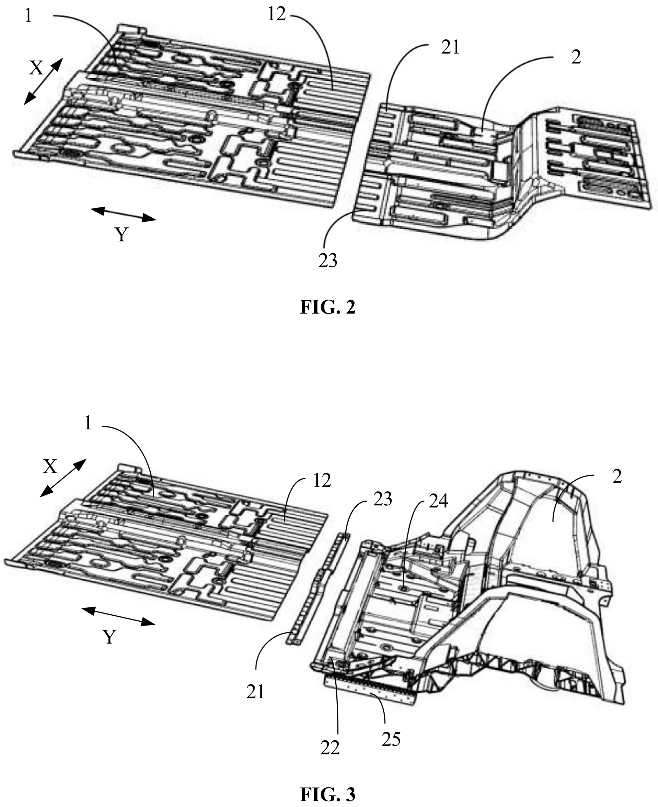

Referring to FIG. 1, the present disclosure provides a vehicle 100. The vehicle 100 includes a front floor 1 and a rear floor 2 that are connected with each other. Referring to FIGS. 2, 3 and 6, the front floor 1 of the present disclosure includes a front floor body 11 and a front interface structure 12. The front floor body 11 includes an upper surface 115, a lower surface 111, and a first side 112 extending in a first direction X. The front interface structure 12 is recessed upward or protruded downward from the lower surface 111, extends along a second direction Y, and includes an opening 121 disposed on the first side 112. Correspondingly, the rear floor 2 includes a rear interface structure 21 mated with the front interface structure 12. The front interface structure 12 is connected to the rear interface structure 21, thereby enabling the rear floor 2 and the front floor 1 to be connected with each other in the second direction Y.

The front interface structure 12 of the front floor 1 of the present disclosure is provided with the opening 121, so that the rear floor 2 can enter the front interface structure 12 along the second direction Y through the opening 121, or the front interface structure 12 of the front floor 1 can enter the rear interface structure 21 along the second direction Y from the opening 121. Moreover, the relative position between the rear floor 2 and the front floor 1 can be adjusted by adjusting the mating depth between the front interface structure 12 and the rear floor 2. Compared with the front interface structure 12 that is closed in the second direction Y, the front interface structure 12 of the present disclosure has a reduced requirement for the rear interface structure 21 in terms of shape matching. The versatility of the front floor 1 is improved, facilitating the connection of the same front interface structure 12 to the rear floors 2 with different sizes and shapes.

The connection between the front interface structure 12 and the rear floor 2 may be achieved by welding, threaded connection, snap-fit, etc., and may be achieved via one or more different ways, which is not limited in the present disclosure.

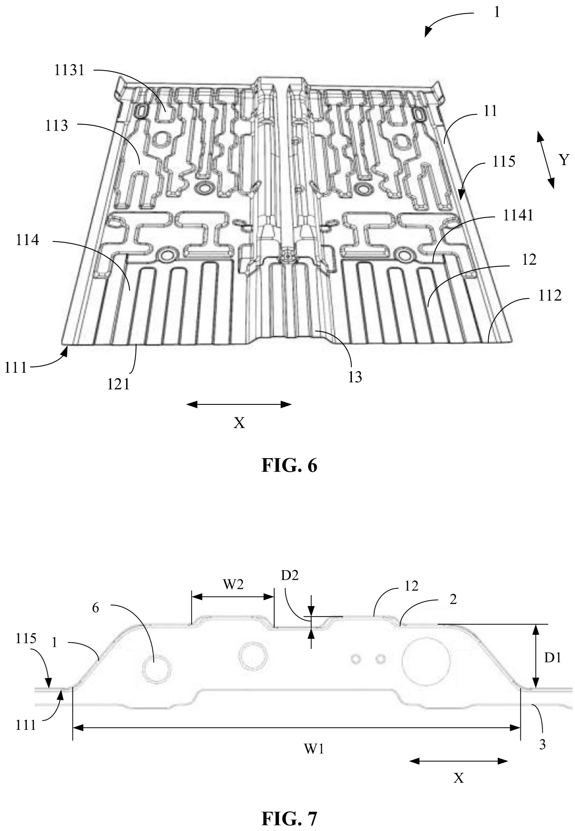

In various embodiments of the present disclosure, the first direction X is different from the second direction Y. In the embodiment shown in FIG. 6, the first direction X is perpendicular to the second direction Y. In other embodiments, the first direction X and the second direction Y may form any included angle therebetween, which is not limited in the present disclosure.

As shown in FIG. 6, the front floor body 11 includes a functional area 113 and a connection area 114. The connection area 114 is disposed between the first side 112 and the functional area 113. The functional area 113 is configured to connect with a front seat (not shown) of the vehicle 100. The front interface structure 12 is disposed in the connection area 114. In other words, at the position where the front interface structure 12 is provided, the front floor 1 is not used for other functional purposes, and the connection area 114 only serves to cooperate with the rear floor 2. In this way, a fitting distance between the rear interface structure 21 and the front interface structure 12 in the second direction Y is adjustable, without affecting the subsequent component connections of the vehicle 100. In addition, since the connection area 114 only plays a connecting role, and the front interface structure 12 includes the opening 121, when it is necessary to change the size of the front floor 1 in the second direction Y, the assembler can reduce the size of the front floor 1 by cutting away part of the connection area 114 without affecting the assembly function of the front floor 1. With this arrangement, the adjustment flexibility of the front floor 1 is improved, and the size of the connection area 114 can also be adjusted to match vehicles 100 with different sizes or to match rear floors 2 with different sizes.

The front floor body 11 includes an upper surface 115 opposite to the lower surface 111. It should be noted that the functional area 113 is connected to the front seat of the vehicle 100, which may be a direct connection or an indirect connection. In an embodiment of the direct connection, the front floor 1 is directly connected to the upper surface 115. In an embodiment of the indirectly connection, the upper surface 115 is connected to a structure such as a cross member, and the seat is connected to the cross member, which has lower requirements for the strength of the front floor 1.

Since the thickness of the connection area 114 after mating with the rear floor 2 is the sum of the thickness of the rear floor 2 and the thickness of the connection area 114, the strength of the connection area 114 is enhanced. In order to improve the strength of the functional area 113, the functional area 113 may be provided with reinforcing ribs 1131 to ensure the support strength of the front floor 1.

The connection area 114 includes an edge 1141 disposed adjacent to the functional area 113. A distance between a side of the front interface structure 12 away from the opening 121 and the edge 1141 is greater than or equal to 10 mm and less than or equal to 40 mm. In this embodiment, the front interface structure 12 extends as far as possible across the connection region 114 along the second direction Y, which increases the adjustability of the fitting distance between the rear floor 2 and the front interface structure 12, and is conducive to improving the mating flexibility of the front floor 1. In addition, as described above, the assembler may cut the front floor body 11 along the first direction X according to actual needs. Therefore, the front interface structure 12 is extended as much as possible, which also enhances the size adjustability of the front floor body 11, and is conducive to ensuring the connection stability between the front floor 1 and the rear floor 2. A distance between the side of the front interface structure 12 away from the opening 121 and the edge 1141 may be 10 mm, 15 mm, 20 mm, 25 mm, 30 mm, 35 mm, or 40 mm.

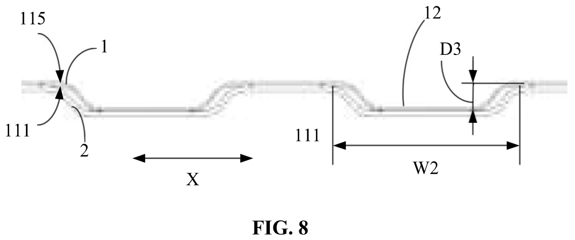

As shown in FIGS. 7 and 8, in some embodiments, a width W2 of the front interface structure 12 in the first direction X is greater than or equal to 45 mm and less than or equal to 65 mm. The increase in the width W2 can increase the contact area between the front interface structure 12 and the rear interface structure 21, enabling the front interface structure 12 to restrict the movement of the front floor 1 and the rear floor 2 in the first direction X. However, the further increase in the width W2 weakens the connection stability between the front interface structure 12 and the rear interface structure 21. Therefore, the width W2 within this range can increase the contact area between the front interface structure 12 and the rear interface structure 21 while ensuring the connection stability. The width W2 may be 45 mm, 50 mm, 55 mm, 60 mm, or 65 mm.

It should be noted that there may be only one front interface structure 12, or there may be a plurality of front interface structures 12 as shown in FIG. 6 and arranged at intervals along the first direction X. The arrangement of the plurality of front interface structures 12 can form connections with the rear interface structure 21 at a plurality of positions, improving the connection stability. The restriction on the range of the width W2 enables the front floor 1 to be provided with as many front interface structures 12 as possible.

In addition, in an embodiment where there are a plurality of front interface structures 12, the distances between different front interface structures 12 and the edge 1141 may be the same or different, which is not limited in the present disclosure.

The technical solution in which the front interface structure 12 is recessed upward from the lower surface 111 provided by the present disclosure will be described below with reference to specific embodiments. As shown in FIG. 7, in some embodiments, a depth D2 of the front interface structure 12 recessed upward from the lower surface 111 is greater than or equal to 3 mm and less than or equal to 6 mm. An increase in the recess depth D2 can improve the connection stability between the front interface structure 12 and the rear interface structure 21, preventing the relative movement between the front floor 1 and the rear floor 2 in the first direction X. However, the further increase in the recess depth D2 does not help to improve the connection stability, but occupies the space of the vehicle 100 in the thickness direction of the front floor 1, affecting the connection of other components. Therefore, the recess depth D2 within this range can balance the connection stability between the front floor 1 and the rear floor 2, while optimizing the size and volume of the front floor 1. The recess depth D2 may be 3 mm, 4 mm, 5 mm, or 6 mm.

It should be noted that the cooperation between the front interface structure 12 and the rear interface structure 21 may be understood as that the front interface structure 12 is recessed upward from the lower surface 111, and the rear interface structure 21 is provided with a protrusion facing the lower surface 111 at the corresponding position. Therefore, the width W2 and the recess depth D2 applicable to the front interface structure 12 are also applicable to the rear interface structure 21.

In addition, when there are a plurality of front interface structures 12, the number of rear interface structures 21 may be the same as the number of front interface structures 12, to improve connection strength between the rear floor 2 and the front floor 1 as much as possible. Alternatively, the number of rear interface structures 21 may be less than the number of front interface structures 12. This is not limited in the present disclosure.

The front interface structure 12 is recessed upward from the lower surface 111, and may be in the form of a groove, and the upper surface 115 is flat at the position corresponding to the front interface structure 12. As shown in FIG. 7, in some embodiments, the front interface structure 12 is recessed upward from the lower surface 111 and protrudes from the upper surface 115. In this embodiment, the thickness variation of the front floor body 11 along the first direction X is uniform, and the uniformity of the intensity at various positions is also improved. This arrangement can effectively avoid the phenomenon of stress fatigue due to the increase in the stress at the position with sudden changes in the wall thickness, thereby effectively improving the overall strength and service life of the front floor body 11.

The vehicle 100 further includes a pipeline 6. The pipeline 6 referred to in the present disclosure should be considered as a macroscopic connection pipeline, for example, a water pipe for conveying liquid, or a wire for implementing electrical connection. These structures are mounted on a side of the lower surface 111 of the front floor 1. In order to increase the arrangement space for the pipeline 6, in some embodiments, the front floor 1 further includes a clearance structure 13 recessed upward from the lower surface 111. The clearance structure 13 extends along the second direction Y. The front interface structure 12 is further disposed on a bottom wall of the clearance structure 13. As shown in FIG. 7, by providing the clearance structure 13, the pipeline 6 can be accommodated in the clearance structure 13, preventing blockage of the pipeline 6 caused by small gaps between components.

In addition, the rear floor 2 is also correspondingly provided with a protrusion structure mated with the clearance structure 13, and the rear interface structure 21 is also disposed on the protrusion structure. Providing as many front interface structures 12 as possible on the front floor body 11 can improve the connection strength and connection stability between the front floor 1 and the rear floor 2, and avoid relative movement between the front floor 1 and the rear floor 2 in the first direction X.

Referring to FIG. 7, in some embodiments, a recess depth D1 of the clearance structure 13 recessed upward from the lower surface 111 is greater than or equal to 30 mm and less than or equal to 40 mm. The increase in the recess depth D1 can increase the space yielded by the front floor 1, providing a more spacious installation space and greater arrangement flexibility for the pipeline 6. However, an excessively large recess depth D1 will result in an excessively large size of the front floor 1 in the thickness direction, compressing the installation space for other components of the vehicle 100. In the present disclosure, by limiting the recess depth D1 within this size range, the front floor 1 can provide sufficient clearance without excessive increase in the volume thereof. The recess depth D1 may be 30 mm, 32 mm, 34 mm, 36 mm, 38 mm, or 40 mm.

In some embodiments, a width W1 of the clearance structure 13 in the first direction X is greater than or equal to 245 mm and less than or equal to 265 mm. The increase in the width W1 of the clearance structure 13 widens the installation width for the pipeline 6 and improves the arrangement flexibility of the pipeline 6. However, an excessively large width W1 will result in the reduction of the installation space for components disposed on a side of the upper surface 115 of the front floor 1. Therefore, the width W1 within this range can balance the clearance space on a side of the lower surface 111 and the installation space on a side of the upper surface 115 of the front floor 1. The width W1 may be 245 mm, 250 mm, 255 mm, 260 mm, or 265 mm.

The technical solution in which the front interface structure 12 protrudes downward from the lower surface 111 will be described below with reference to the foregoing embodiments. As shown in FIG. 8, in some embodiments, a depth D3 of the front interface structure 12 protruding downward from the lower surface 111 is greater than or equal to 3 mm and less than or equal to 6 mm. The increase in the protrusion depth D3 can improve the connection stability between the front interface structure 12 and the rear interface structure 21, and prevent the relative movement between the front floor 1 and the rear floor 2 in the first direction X. However, the further increase in the protrusion depth D3 does not help to improve the connection stability, while occupying the space of the vehicle 100 in the thickness direction of the front floor 1, and affecting the connection of other components. Therefore, the protrusion depth D3 within this range can balance the connection stability between the front floor 1 and the rear floor 2, while optimizing the size and volume of the front floor 1. The protrusion depth D3 may be 3 mm, 4 mm, 5 mm, or 6 mm.

It should be noted that the cooperation between the front interface structure 12 and the rear interface structure 21 may be understood as that the front interface structure 12 protrudes downward from the lower surface 111, and the rear interface structure 21 is provided with a downward recess at the corresponding position. Therefore, the width W2 and the protrusion depth D3 applicable to the front interface structure 12 are also applicable to the rear interface structure 21.

In addition, when there are a plurality of front interface structures 12, the number of rear interface structures 21 may be the same as the number of front interface structures 12, thereby improving connection strength between the rear floor 2 and the front floor 1 as much as possible. Alternatively, the number of rear interface structures 21 may be less than the number of front interface structures 12. This is not limited in the present disclosure.

The front interface structure 12 protrudes downward from the lower surface 111, and may be in the form of a protrusion, and the upper surface 115 is flat at the position corresponding to the front interface structure 12. As shown in FIG. 8, in some embodiments, the front interface structure 12 is formed as a protrusion by the combined downward protrusion of the upper surface 115 and the lower surface 111. In this embodiment, the thickness variation of the front floor body 11 along the first direction X is uniform, and the uniformity of the intensity at various positions is also improved. This arrangement can effectively avoid the phenomenon of stress fatigue due to the increase in the stress at the position with sudden changes in the wall thickness, thereby effectively improving the overall strength and service life of the front floor body 11.

In addition, in the technical solution in which the front interface structure 12 protrudes downward from the lower surface 111, for the arrangement of the pipeline 6 and the clearance structure 13, reference may be made to the description of the foregoing related embodiments, and details will not be repeated herein.

The following describes the rear floor 2. It should be noted that all embodiments of the present disclosure may be combined with and supplemented to each other without conflict.

Referring to FIGS. 2 and 3, the rear floor 2 includes a rear floor body 22 and a connection plate 23. The rear interface structure 21 is disposed on the connection plate 23. In an embodiment, as shown in FIG. 2, the rear floor body 22 and the connection plate 23 are integrally formed. In another embodiment, as shown in FIG. 3, the rear floor body 22 is fixedly connected to the connection plate 23. In the embodiment of the integrally formed structure, the connection plate 23 and the rear floor body 22 form a continuous structure, thereby improving the connection stability between the connection plate 23 and the rear floor body 22, and further improving the connection stability between the rear floor 2 and the front floor 1. In the embodiment of fixed connection, in the rear floor 2, the arrangement of the connection plate 23 can be adjusted according to factors such as the thickness and structure of the rear floor body 22, enabling the rear floor 2 to cooperate with the front floor 1.

In the embodiments shown in FIGS. 2 and 3, the front floors 1 are identical. In other words, the strip-shaped arrangement of the opening 121 of the front interface structure 12 in the present disclosure effectively improves the versatility of the front interface structure 12, enabling the front floor 1 to be connected to the rear floors 2 of different structures through the front interface structure 12. During a process of producing the vehicle 100, a manufacturer may use one type of front floor 1 to match different rear floors 2, thereby producing a variety of vehicle models. It can be seen that the arrangement of the front floor 1 in the present disclosure can reduce design and production costs of the vehicle 100, and improve design and production efficiency of the vehicle 100.

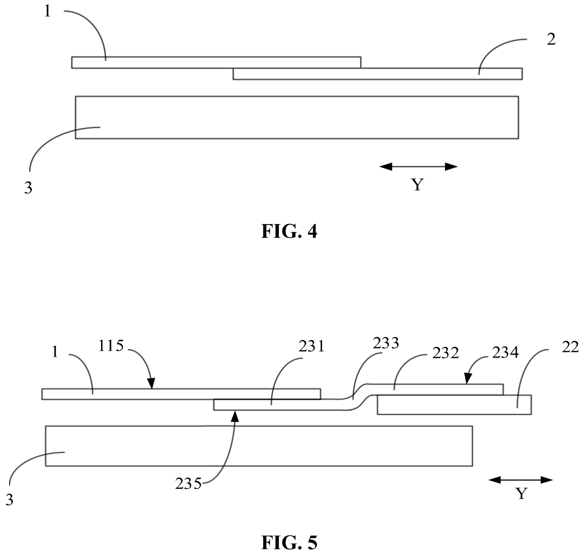

As shown in FIG. 4, the vehicle 100 includes a battery 3. The battery 3 is disposed on the side of the lower surface 111 of the front floor 1. In an embodiment shown in FIG. 4, the rear floor body 22 and the connection plate 23 of the rear floor 2 are integrally formed. In an embodiment shown in FIG. 5, the connection plate 23 is fixedly connected to the rear floor body 22. The connection plate 23 includes a first portion 231, a second portion 232, and a third portion 233. The first portion 231 is connected to the front floor 1. The second portion 232 is fixedly connected to the rear floor body 22 and spaced apart from the first portion 231 in the second direction Y. The third portion 233 connects the first portion 231 and the second portion 232, and the third portion 233 extends from the first portion 231 to the second portion 232 in a direction from the lower surface 111 to the upper surface 115. With the battery 3 as a reference frame, the second portion 232 is farther away from the battery 3 than the first portion 231.

It can be seen from a comparison between FIG. 4 and FIG. 5 that a thickness of the rear floor body 22 in the embodiment shown in FIG. 5 is greater than a thickness of the rear floor body 22 in the embodiment shown in FIG. 4. This arrangement of the connection plate 23 enables the front floor 1 to be connected to the rear floor 2 with a thicker rear floor body 22 while maintaining the relative position between the front floor 1 and the battery 3 unchanged. When the thickness of the rear floor body 22 is further increased, the extension length of the third portion 233 may be increased, thereby further increasing the distance between the second portion 232 and the battery 3.

The arrangement of the connection plate 23 enables the rear floor bodies 22 of different specifications to be connected to the front floor 1 without changing the positions of the front floor 1 and the battery 3 of the vehicle 100. In this way, during a production process of the vehicle 100, the rear floor 2 may be replaced for different vehicle models, without adaptively modifying the relative position between the front floor 1 and the battery 3, and the connection interface, thereby helping reduce production costs.

Further, the connection plate 23 includes an upper surface 234 and a lower surface 235 opposite to each other. With the battery 3 as the reference frame, the upper surface 234 of the connection plate 23 is away from the battery 3, and the lower surface 235 of the connection plate 23 is close to the battery 3. In some embodiments, both the front floor 1 and the rear floor body 22 are connected to the upper surface 234 of the connection plate 23, or are connected to the lower surface 235 of the connection plate 23. In the embodiment shown in FIG. 5, the front floor 1 is connected to the upper surface 234 of the connection plate 23, and the rear floor body 22 is connected to the lower surface 235 of the connection plate 23. Since the second portion 232 is farther away from the battery 3 than the first portion 231, the third portion 233 extends from the first portion 231 to the second portion 232 away from the battery 3. By connecting the rear floor body 22 to the lower surface 235 of the connection plate 23 and connecting the front floor 1 to the upper surface 234 of the connection plate 23, the distance in height between the upper surface 115 of the front floor 1 and the second portion 232 at the position of the upper surface 234 of the connection plate 23 is reduced, which helps improve the flatness of the upper surface 115 of the front floor 1, thereby facilitating the connection of subsequent structures such as a cross member, without additionally providing other structures to compensate for the height difference.

Referring to FIG. 1, the rear floor 2 includes a battery interface (not shown). The battery 3 is connected to the rear floor 2 through the battery interface. In an embodiment in which the connection plate 23 and the rear floor body 22 are integrally formed, the rear floor 2 is referred to as a first floor. In an embodiment in which the connection plate 23 is fixedly connected to the rear floor body 22, the rear floor 2 is referred to as a second floor. In this embodiment, the battery interfaces of the first floor and the second floor may be the same. In other words, when the battery 3 of the vehicle 100 remains unchanged, the vehicle 100 may optionally connect the first floor to the front interface structure 12 and the battery 3, or connect the second floor to the front interface structure 12 and the battery 3, without redesigning the position and interface of the battery 3, which can effectively reduce the design and production costs of the vehicle 100.

Similarly, the vehicle 100 includes a rear seat 4. The rear floor 2 includes a seat interface 24 as shown in FIG. 3, and the rear seat 4 is connected to the rear floor 2 through the seat interface 24. In this embodiment, the seat interfaces 24 of the first and second floors may be identical. When the rear seat 4 of the vehicle 100 remains unchanged, the vehicle 100 may optionally connect the rear seat 4 to the first floor, or connect the rear seat 4 to the second floor, without redesigning an interface or a connection position of the rear seat 4, which can effectively reduce design and production costs of the vehicle 100.

With continued reference to FIG. 1, vehicle 100 includes a suspension 5. The rear floor 2 includes a suspension interface (not shown). The suspension 5 is connected to the rear floor 2 through the suspension interface. In this embodiment, the suspension interfaces of the first floor and the second floor may be identical. When the suspension 5 of the vehicle 100 remains unchanged, the vehicle 100 may optionally connect the suspension 5 to the first floor or connect the suspension 5 to the second floor, without redesigning an interface and a structure of the suspension 5, which can effectively reduce design and production costs of the vehicle 100.

With reference to FIG. 3, the vehicle 100 includes a sill (not shown). The rear floor 2 includes a sill interface 25. The sill is connected to the rear floor 2 through the sill interface 25. In this embodiment, the sill interfaces 25 of the first floor and the second floor may be identical. When the sill of the vehicle 100 remains unchanged, the vehicle 100 may optionally connect the sill to the first floor, or optionally connect the sill to the second floor, without redesigning an interface and a structure of the sill, which can effectively reduce design and production costs of the vehicle 100.

The specific embodiments described herein are merely illustrative examples of the spirit of the present disclosure. Those skilled in the art to which the present disclosure pertains may make various modifications, supplements, or substitutions to the described specific embodiments using similar methods, without departing from the spirit of the present disclosure or going beyond the scope defined by the appended claims.

The technical features of the above embodiments may be combined arbitrarily, and in order to make the description concise, not all possible combinations of the technical features in the above embodiments are described. However, as long as there is no contradiction in these combinations of technical features, they should be considered as falling within the scope of the present specification.

## Claims

1. A front floor, applied to a vehicle, the front floor comprising:
a front floor body comprising an upper surface, a lower surface, and a first side extending in a first direction; and
a front interface structure recessed upward or protruding downward from the lower surface, wherein the front interface structure extends in a second direction and comprises an opening disposed on the first side; the front interface structure is configured to be connected to a rear floor of the vehicle; and the first direction is different from the second direction.

2. The front floor according to claim 1, wherein the front floor body comprises a functional area and a connection area; the connection area is disposed between the first side and the functional area; the functional area is configured to be connected to a front seat of the vehicle; and the front interface structure is disposed in the connection area.

3. The front floor according to claim 2, wherein the connection area comprises an edge disposed close to the functional area; and a distance between a side of the front interface structure away from the opening and the edge is greater than or equal to 10 mm and less than or equal to 40 mm.

4. The front floor according to claim 1, further comprising a clearance structure recessed upward from the lower surface; the clearance structure extends along the second direction; and the front interface structure is further disposed on a bottom wall of the clearance structure.

5. The front floor according to claim 4, wherein a recess depth of the clearance structure recessed upward from the lower surface is greater than or equal to 30 mm and less than or equal to 40 mm; and/or
a width of the clearance structure in the first direction is greater than or equal to 245 mm and less than or equal to 265 mm.

6. The front floor according to claim 1, wherein a width of the front interface structure in the first direction is greater than or equal to 45 mm and less than or equal to 65 mm; and/or
a depth of the front interface structure recessed upward from the lower surface is greater than or equal to 3 mm and less than or equal to 6 mm; or a depth of the front interface structure protruding downward from the lower surface is greater than or equal to 3 mm and less than or equal to 6 mm.

7. A vehicle, comprising the front floor according to any one of claims 1 to 6 and a rear floor, wherein the rear floor comprises a rear interface structure cooperating with the front interface structure, so that the rear floor and the front floor are connected with each other in the second direction.

8. The vehicle according to claim 7, wherein the rear floor comprises a rear floor body and a connection plate; the rear floor body and the connection plate are fixedly connected with each other or integrally formed; and the rear interface structure is disposed on the connection plate.

9. The vehicle according to claim 8, wherein the connection plate is fixedly connected to the rear floor body; and the connection plate comprises:
a first portion connected to the front floor;
a second portion fixedly connected to the rear floor body, wherein the second portion and the first portion are spaced apart from each other in the second direction; and
a third portion connecting the first portion and the second portion, wherein the third portion extends from the first portion to the second portion along a direction from the lower surface to the upper surface.

10. The vehicle according to claim 7, further comprising a rear seat, wherein the rear floor comprises a seat interface; and the rear seat is connected to the rear floor through the seat interface; and/or
the vehicle comprises a battery; the rear floor comprises a battery interface; and the battery is connected to the rear floor through the battery interface; and/or
the vehicle comprises a suspension; the rear floor comprises a suspension interface; and the suspension is connected to the rear floor through the suspension interface; and/or
the vehicle comprises a sill; the rear floor comprises a sill interface; and the sill is connected to the rear floor through the sill interface.
